# EUROPÄISCHE PATENTSCHRIFT

(11) **EP 0 564 988 B1**
(45) Veröffentlichungstag und Bekanntmachung des Hinweises auf die Patenterteilung: **24.07.1996**
(21) Anmeldenummer: 93105459.7
(22) Anmeldetag: 02.04.1993
(51) Int. Cl.: B65G 47/52, B65G 47/64, B65B 35/44

(54) **Verfahren und Vorrichtung zum Transport von Packungen**
Method and device for transporting packages
Procédé et dispositif pour le transport d'emballages

(30) Priorität: 07.04.1992 DE 4211643; 01.08.1992 DE 4225494
(43) Veröffentlichungstag der Anmeldung: 13.10.1993
(73) Patentinhaber: Focke & Co. (GmbH & Co.), D-27283 Verden (DE)
(72) Erfinder: Focke, Heinz, W-2810 Verden (DE); Balmer, Oskar, W-2810 Verden (DE)
(74) Vertreter: Bolte, Erich, Dipl.-Ing.

(56) Entgegenhaltungen:
- CH-A- 435 098
- DE-A- 3 942 708

## Beschreibung

Die Erfindung betrifft ein Verfahren zum Transport eines aus mehreren übereinander oder nebeneinander angeordneten Reihen von Packungen bestehenden Packungsstrangs mit relativ zueinander ausgerichteten Packungen der Reihen. Ferner betrifft die Erfindung eine Vorrichtung zur Durchführung des Verfahrens.

Ein solches Verfahren und eine Vorrichtung sind bekannt aus der CH-A-435 098. Bei dieser Vorrichtung wird ein aus vier Reihen bestehender Packungsstrang durch je einen oberhalb und unterhalb des Packungsstrangs angeordneten Fördergurt gegen einen Anschlag transportiert. Jeweils einer Reihe zugeordnete Taster überwachen, ob die jeweilige Reihe an dem Anschlag anliegt. Bleibt eine Reihe gegenüber anderen Reihen zurück, wird der Antrieb der Fördergurte solange fortgesetzt, bis alle Packungsreihen an dem Anschlag anliegen. Dabei reiben die Fördergurte auf bereits am Anschlag anliegende und somit stillstehenden Reihen. Hierdurch können die Stirnseiten der Packungen beschädigt werden.

Es ist Aufgabe der Erfindung, Maßnahmen vorzuschlagen, durch die Transport und anderweitige Handhabung eines Packungsstrangs bei exakt ausgerichteten Packungen der Reihen zueinander bei schonender Behandlung der Packungen gewährleistet ist.

Zur Lösung dieser Aufgabe ist das erfindungsgemäße Verfahren dadurch gekennzeichnet, daß die Relativstellung der Packungen der Reihen zueinander überwacht und daß jeder Reihe ein gesondertes Förderorgan zugeordnet ist, das bei Relativverschiebung von Reihe zu Reihe eine in Förderrichtung zurückliegende Reihe aufgrund entsprechender Steuersignale von Überwachungsorganen durch zusätzliche Förderbewegung relativ zu den übrigen Reihen bis zur Ausrichtung mit diesen transportiert.

Der Packungsstrang aus mehreren Reihen wird als Einheit kontinuierlich oder taktweise transportiert. Bei Versatz der Packungen einer Reihe zu den übrigen wird auf die betreffende, in Transportrichtung zurückliegende Reihe ein zusätzlicher Förderantrieb übertragen, bis die Gleichstellung der Packungen erreicht ist. Insbesondere wird dies dadurch bewirkt, daß die in Transportrichtung vornliegenden, zueinander ausgerichteten Reihen gegen einen Anschlag transportiert werden und so zum Stillstand kommen, während die zurückliegende Reihe weitertransportiert wird, ebenfalls bis zum Erreichen des Anschlags. In dieser Stellung kann eine Packungsgruppe als in Transportrichtung vornliegender Abschnitt des Packungsstrangs als Packungsgruppe eines Gebindes in Querrichtung abgefördert werden.

Die erfindungsgemäße Vorrichtung ist durch die Merkmale des Anspruchs 4 gekennzeichnet.

Gemäß einem bevorzugten Ausführungsbeispiel der Erfindung sind als gesonderte Förderorgane jeder Reihe zugeordnete Fördergurte vorgesehen, die vorzugsweise an einander gegenüberliegenden Seiten wirksam werden, nämlich an Seitenflächen der Packungen. Gemäß einem weiteren Merkmal der Erfindung sind die Förderorgane bzw. Fördergurte so im Bereich einer Transportstrecke für den Packungsstrang angeordnet, daß sie außerhalb des Bereichs der Seitenförderer wirksam werden, nämlich in Transportrichtung nach diesen. Der Packungsstrang hat bei der erfindungsgemäßen Anordnung den Bereich der Seitenförderer verlassen und wird in einem Endabschnitt der Transportstrecke frei durch die Schubwirkung der Packungen gefördert. Hier werden erfindungsgemäß die Fördergurte wirksam.

Die Fördergurte jeder Reihe liegen an den Seitenflächen mehrerer benachbart angeordneter Packungen an. Der Fördergurt wird durch zwei Umlenkrollen und durch eine zwischen diesen angeordnete Stützrolle geführt, wobei eine Umlenkrolle etwas versetzt nach außen angeordnet ist. Hierdurch nähert sich in Antriebsstellung der Fördergurt dem Packungsstrang unter einem spitzen Winkel zur Transportrichtung, so daß er sich an die Seitenflächen der Packungen anschmiegt.

Wird der Fördergurt nicht angetrieben, befindet er sich durch Anlage an einem Bremsorgan in einer Bremsstellung. Hierdurch werden die im Vergleich zu anderen Reihen vornliegenden Packungen einer Reihe abgebremst, bis eine Gleichstellung der Packungen mit den Packungen anderer Reihen erreicht ist.

Eine weitere vorteilhafte Wirkung der Erfindung ergibt sich aus dem Einsatz der Fördergurte als Bremsorgan für den Packungsstrang. Befinden sich nämlich alle Fördergurte in Bremsstellung, kann eine ordnungsgemäße Abförderung des in Endstellung gebrachten vornliegenden Abschnitts des Packungsstrangs in Querrichtung erfolgen. Während der Querverschiebung des vorne liegenden Abschnitts werden durch die Fördergurte mehrere hintereinanderliegende Packungen festgehalten. Ein zusätzliches Bremsorgan ist damit nicht erforderlich.

Weitere Merkmale der Erfindung beziehen sich auf die Anordnung der Förderorgane, auf Rückhalteorgane für den Packungsstrang sowie auf die Positionierung von Überwachungsorganen.

Ein Ausführungsbeispiel der Erfindung wird nachfolgend anhand der Zeichnungen näher erläutert. Es zeigt:

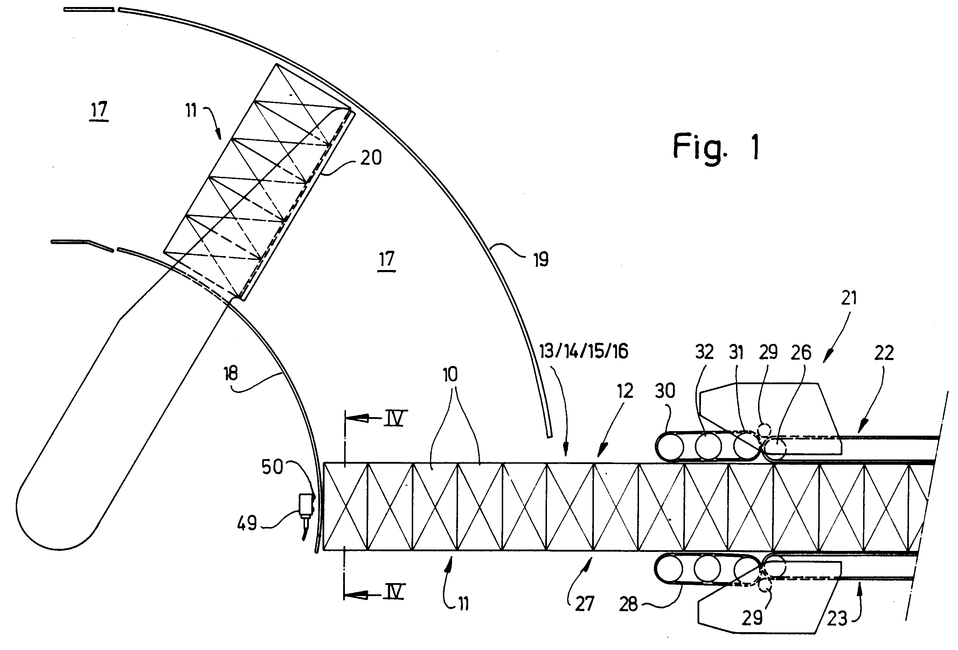

- Fig. 1: Einen Teilbereich einer Transporteinrichtung für Packungen in schematischem Grundriß,
- Fig. 2: einen Ausschnitt der Einrichtung gemäß Fig. 1 in vergrößertem Maßstab, teilweise geschnitten,

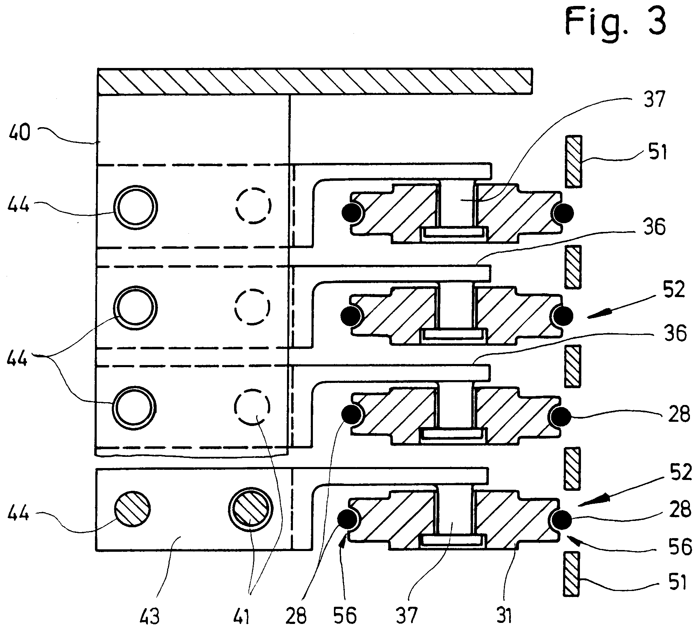

- Fig. 3: einen Schnitt in der Ebene III - III der Fig. 2,

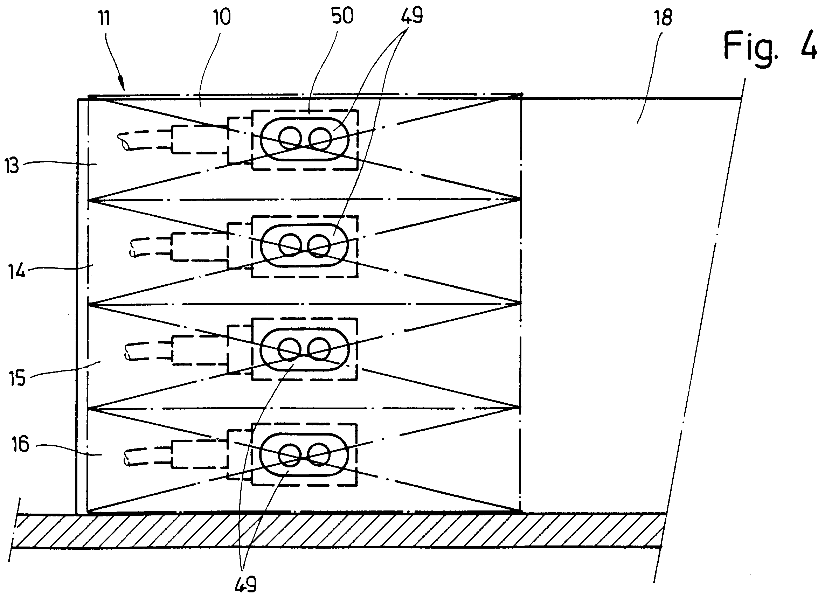

- Fig. 4: die Anordnung von Überwachungsorganen in einer Schnittebene IV - IV der Fig. 1.

Das in den Zeichnungen dargestellte Ausführungsbeispiel bezieht sich auf die Handhabung von quaderförmigen Packungen 10, und zwar Weichpackungen für Papier-Taschentücher. Eine Gruppe von gefalteten Papier-Taschentüchern wird unter Bildung einer Packung 10 durch eine dünne Folie eingehüllt. Es geht nun darum, aus einer Mehrzahl von geordneten Packungen 10, nämlich aus einer Packungsgruppe 11, eine Großpackung, nämlich ein Gebinde, zu bilden.

Zu diesem Zweck werden die Packungen 10 als Packungsstrang 12 einer Station zum Bilden der Packungsgruppen 11 zugefördert. Der Packungsstrang 12 besteht aus mehreren, im vorliegenden Falle vier übereinander angeordneten Reihen 13, 14, 15 und 16 von Packungen 10. Die Packungen 10 dieser Reihen 13..16 sind zueinander ausgerichtet, liegen also genau übereinander.

Zur Bildung der Packungsgruppe 11 wird ein jeweils in Transportrichtung vornliegender Abschnitt des Packungsstrangs 12 in Querrichtung unter Bildung der Packungsgruppe 11 abgefördert. Bei dem vorliegenden Ausführungsbeispiel wird die Packungsgruppe 11 auf einer kreisbogenförmigen Gruppenbahn 17 mit seitlichen Führungen 18 und 19 in Querrichtung abtransportiert. Zu diesem Zweck ist ein mittig zur Gruppenbahn 17 gelagerter, entlang einer Kreisbahn umlaufender Abschieber 20 vorgesehen. Dieser erfaßt einen im Bereich der Gruppenbahn 17 liegenden, vorderen Abschnitt des Packungsstrangs 12 als Packungsgruppe 11 und transportiert diese auf der Gruppenbahn 17 zu einer Verpackungsstation (nicht gezeigt). Die Packungsgruppe 11 als ursprünglich vornliegender Abschnitt des Packungsstrangs 12 erstreckt sich in Radialrichtung über die Breite der Gruppenbahn 17, nämlich zwischen deren Führungen 18, 19.

Der Packungsstrang 12 wird entlang einer Packungsbahn 21 in Radialrichtung der Gruppenbahn 17 zugeführt. Jeweils vornliegende Packungen 10 des Packungsstrangs 12 werden gegen einen Anschlag gefördert, im vorliegenden Fall gegen die innenliegende, kreisbogenförmige Führung 18. Mit dem Auftreffen des Packungsstrangs 12 auf die Führung 18 ist ein der Packungsgruppe 11 entsprechender vorderer Abschnitt des Packungsstrangs 12 im Bereich der Gruppenbahn 17 positioniert, nämlich exakt zwischen den Führungen 18 und 19. Für den korrekten Abschub der Packungsgruppe 11 ist es wichtig, daß die Packungen 10 der Reihen 13..16 exakt übereinanderliegen. Nur dadurch kann die Packungsgruppe 11 störungsfrei als vorderer Abschnitt von dem Packungsstrang 12 abgefördert werden und in den Bereich zwischen den Führungen 18 und 19 eintreten.

Die Packungsbahn 21 besteht bei dem vorliegenden Ausführungsbeispiel aus einer Unterlage für die vier übereinander angeordneten Reihen 13..16 (nicht gezeigt). Diese Unterlage besteht aus einem Obertrum eines Gurtförderers. Dieser Obertrum wird dabei auf einer mit einem Maschinengestell verbundenen Tragplatte geführt. Der Gurtförderer bzw. dessen Obertrum wird in Förderrichtung angetrieben.

Weiterhin gehören zur Packungsbahn 21 seitlich angeordnete Förderer, also Seitenförderer 22 und 23. Auch bei diesen handelt es sich um Gurtförderer. Ein jeweils dem Packungsstrang 12 zugekehrter Fördertrum 24 erstreckt sich vorzugsweise über die Höhe des Packungsstrangs 12, so daß alle Reihen 13..16 seitlich in förderndem Sinne erfaßt werden. Im Bereich der Seitenförderer 22, 23 erstreckt sich jeweils zwischen den Trumen eine aufrechte Tragwand 25, die ihrerseits mit der Tragplatte oder einem anderen Teil des Maschinengestells verbunden ist. Die Seitenförderer 22, 23 laufen um aufrechte Umlenkwalzen 26, die angetrieben sein können.

Ein durch die Seitenförderer 22, 23 und den Gurtförderer definierter Förderabschnitt der Packungsbahn 21 endet mit Abstand von der Gruppenbahn 17. Im Bereich zwischen dieser und den Seitenförderern 22, 23 liegt der Packungsstrang 12 gleitend auf einer Unterlage (nicht gezeigt).

Die Packungsbahn 21 ist im den Seitenförderern 22, 23 unmittelbar anschließenden Bereich mit zusätzlichen Förderorganen ausgerüstet, die einen Ausgleich zwischen den Reihen 13..16 bewirken, wenn deren Packungen 10 zueinander versetzt angeordnet sind. Zwischen diesen zusätzlichen Förderorganen und der Gruppenbahn 17 ist ein antriebsfreier Abschnitt 27 der Packungsbahn 21 gebildet, in dem sich die Förderung der Packungen 10 aus der Schubbewegung der nachfolgenden Packungen 10 ergibt.

Bei dem vorliegenden Ausführungsbeispiel sind die zusätzlichen Förderorgane als Fördergurte 28 ausgebildet und befinden sich zu beiden Seiten des Packungsstrangs 12. Die Fördergurte 28 sind dabei jeder Reihe 13..16 zugeordnet. Jeder Fördergurt 28 liegt an einer Seitenfläche der Reihe 13..16 bzw. an einer seitlich gerichteten Stirnfläche der Packungen 10 an, wobei die Fördergurte 28 übereinander angeordnet sind. Die Fördergurte 28 bestehen aus einem elastischen Material erhöhter Reibzahl.

Die Fördergurte 28 sind über Umlenkrollen 30, 31 und eine zwischen diesen angeordnete Stützrolle 32 geführt. Die Fördergurte 28 weisen jeweils einen Förder-Trum 33 auf, der dem Packungsstrang 12 zugekehrt ist und an mehreren Packungen 10 jeder Reihe 13..16 gleichzeitig anliegt.

Die Fördergurte 28 kommen dann für eine oder mehrere Reihen 13..16 zur Wirkung, wenn eine Reihe 13..16 gegenüber den übrigen versetzt ist, nämlich in Förderrichtung zurückliegt. Die betreffende Reihe 13..16 wird durch die zugeordneten Fördergurte 28 (weiter-)gefördert, bis die exakte Gleichstellung mit den Packungen 10 der übrigen Reihen 13..16 gegeben ist.

Die Fördergurte 28 stehen antriebstechnisch in Verbindung mit den Seitenförderern 22, 23. Die Antriebsbewegung wird von den Seitenförderern 22, 23 bzw. deren Umlenkwalzen 26 über Zwischenrollen 29 auf die Fördergurte 28 übertragen. Jedem Fördergurt 28 ist eine derartige Zwischenrolle 29 zugeordnet, die einerseits am Seitenförderer 22, 23 und andererseits am Fördergurt 28 anliegt. Die Kraftübertragung erfolgt durch Reibschluß.

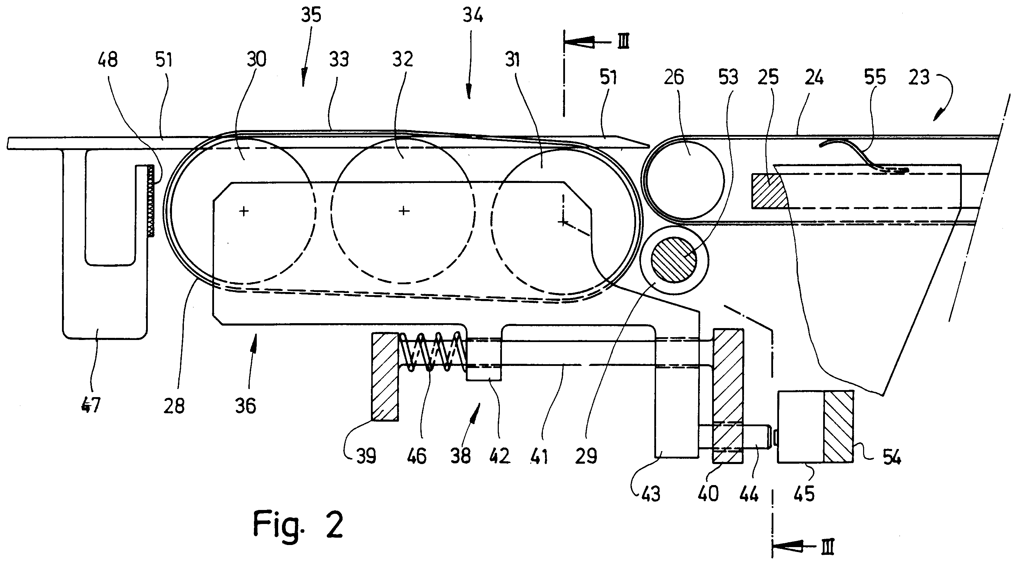

Fig. 2 zeigt die Anordnung der Fördergurte 28 in der Antriebsstellung. Nachdem die Packungen 10 den durch die Seitenförderer 22, 23 definierten Förderabschnitt verlassen haben, treten sie in einen Eingangsabschnitt 34 der Fördergurte 28. Die Förder-Trume 33 der Fördergurte 28 laufen allmählich, nämlich unter einem spitzen Winkel bezüglich der Transportrichtung auf die Stirnflächen der Packungen 10 zu. Dies wird durch eine versetzte Positionierung der in Transportrichtung rückwärtig angeordneten Umlenkrollen 31 erreicht, derart, daß sich die Umlenkrollen 31 mit den durch diese geführten Fördergurten 28 außerhalb der Packungsbahn 21 befinden. In einem weiteren, sich anschließenden Förderabschnitt 35 liegen die Förder-Trume 33 an den Stirnflächen der Reihen 13..16 an, wobei die Förder-Trume 33 parallel zur Transportrichtung verlaufen. Hierzu sind die Umlenkrollen 30 und die Stützrollen 32 in einer Ebene parallel zur Transportrichtung angeordnet.

Die jeweils einem Fördergurt 28 zugeordneten Umlenkrollen 30, 31 und Stützrollen 32 sind mit einer Halteplatte 36 verbunden, wobei die Rollen 30, 31, 32 auf Achszapfen 37 der Halteplatte 36 drehbar gelagert sind. Die Halteplatte 36 ist an einem Seitenträger 38 befestigt, der einerseits aus aufrechten, zueinander parallel angeordneten Tragewänden 39, 40 und andererseits aus einer diese Tragwände 39, 40 verbindende, parallel zur Transportrichtung angeordnete Verbindungsstange 41 besteht. Zur Verbindung mit dem Seitenträger 38 weist die Halteplatte 36 eine Haltenase 42 und einen Haltearm 43 auf, die Bohrungen aufweisen zur verschiebbaren Lagerung auf der Verbindungsstange 41 des Seitenträgers 38. An dem Haltearm 43 ist eine Schubstange 44 befestigt, die durch eine Bohrung der zu den Seitenförderern 22, 23 zugekehrten Tragwand 40 geführt und in dieser verschiebbar gelagert ist. Diese Schubstange 44 ist in Längsrichtung, nämlich in Förderrichtung verschiebbar gelagert. Um den Fördergurt 28 im Sinne eines Abhebens von der Zwischenrolle 29 zu verschieben, wirkt ein Druckmittelzylinder 45 mit Kolbenstange auf das freie Ende der Schubstange 44 ein. Zusammen mit der Schubstange 44 wird dann die Halteplatte 36 entlang der Verbindungsstange 41 des Seitenträgers 38 bewegt, wobei der Fördergurt 28 außer Antriebsstellung gebracht wird.

Auf der Verbindungsstange 41 ist im Bereich zwischen der in Förderrichtung vornliegenden Tragwand 39 und der Haltenase 42 der Halteplatte 36 eine Druckfeder 46 angeordnet. Diese ist zusammengedrückt und bewirkt bei zurückgezogener Kolbenstange des Druckmittelzylinders 45 eine selbsttätige Rückkehr der Schubstange 44 in die in Fig. 2 gezeigte Ausgangsstellung unter Anlage der Fördergurte 28 an der Zwischenrolle 29.

In der von der Zwischenrolle 29 abgehobenen, hier nicht gezeigten Stellung der Fördergurte 28 werden diese abgebremst. Zu diesem Zweck ist im Bereich der Umlenkrolle 30 ein Bremsorgan, nämlich ein Bremsschenkel 47 mit einer Bremsfläche 48 angeordnet. In der Bremsstellung wird der auf der Umlenkrolle 30 aufliegende Fördergurt 28 an die Bremsfläche 48 gedrückt. Die Bremsfläche 48 besteht aus einem Material mit einer erhöhten Reibzahl.

Der gesonderte Antrieb für die einzelnen Reihen 13..16 in Gestalt der Fördergurte 28 ist hier so ausgelegt, daß die in Förderrichtung zurückliegende Reihe 13..16 durch die zugeordneten Fördergurte 28 weiterbewegt, die übrigen Reihen 13..16 jedoch durch die entsprechende Position der Fördergurte 28 gebremst werden.

Die Arbeitsweise der Vorrichtung ist wie folgt: Die Formation des Packungsstrangs 12 wird im Endbereich der Packungsbahn 21 durch Kontrollorgane überprüft. Bei dem gezeigten Ausführungsbeispiel wird das in Transportrichtung vornliegende Ende des Packungsstrangs 12 überprüft. Zu diesem Zweck sind Prüforgane, nämlich optoelektrische Sensoren 49 im Bereich des Anschlags für den Packungsstrang 12 angeordnet, also an der innenseitigen Führung 18. Jeder Reihe 13..16 ist ein Sensor 49 mit Sender und Empfänger zugeordnet. Die Führung 18 ist im Bereich der Sensoren 49 mit einer Ausnehmung 50 versehen.

Das nach dem Abschub einer Packungsgruppe 11 vordere Ende des Packungsstrangs 12 wird auf dem Wege bis zur Anlage an der Führung 18 durch die Sensoren 49 überprüft. Wird eine unerwünschte Relativstellung durch eine (oder mehrere) in Förderrichtung nach hinten versetzte Reihe 13..16 erkannt, wird durch den betroffenen Sensor 49 die Ausgleichsförderung eingeleitet. Die hinsichtlich der Relativstellung korrekten Reihen 13..16 laufen bis zur Anlage am Anschlag (Führung 18). Die betreffenden Reihen 13..16 kommen dadurch zum Stillstand. Die diesen Reihen 13..16 zugeordneten Fördergurte 28 werden in der beschriebenen Weise auf Bremsstellung geschaltet, also von der Antriebsverbindung mit den Seitenförderern 22, 23 abgehoben. Für die zurückliegende Reihe 13..16 wird der Transport durch den zugeordneten Fördergurt 28 fortgesetzt, der weiterhin in Antriebsverbindung mit den Seitenförderern 22, 23 bleibt. Der Antrieb dieser Reihe 13..16 wird fortgesetzt, bis die in Förderrichtung vornliegende Packung 10 der Reihe 13..16 ebenfalls an der Führung 18 anliegt. Damit ist Gleichstellung aller Reihen 13..16 gegeben. Es wird nun auch der dieser zurückliegenden Reihe 13..16 zugeordnete Fördergurt 28 in die Bremsstellung bewegt.

Nach Erreichen der korrekten Endstellung befinden sich die Fördergurte 28 jeder Reihe 13..16 in Bremsstellung. Die Fördergurte 28 weisen eine Länge auf, derart, daß sie mit ihren Förder-Trumen 33 zu beiden Seiten des Packungsstrangs 12 an den Stirnflächen mehrerer hintereinanderliegender Packungen 10 anliegen. Dadurch wird eine ausreichende Bremswirkung erzielt, so daß der vornliegende Abschnitt des Packungsstrangs 12, nämlich die Packungsgruppe 11 von dem Abschieber 20 erfaßt und auf der Gruppenbahn 17 quer verschoben werden kann. Ein zusätzliches Bremsorgan zum zeitweiligen Fixieren des Packungsstrangs 12 ist nicht erforderlich, weil der Packungsstrang 12 durch die Fördergurte 28 in Bremsstellung ausreichend fixiert ist.

Als zusätzliche Führungsorgane im Bereich zwischen den Seitenförderern 22, 23 und der außenliegenden Führung 19 ist an den Seiten des Packungsstrangs 12 eine Seitenführung 51 angebracht. Diese weist im Bereich der Fördergurte 28 Schlitze 52 auf, durch die die Förder-Trume 33 der Fördergurte 28 zur Anlage an den Stirnflächen der Packungen 10 hindurchtreten. Die Seitenführungen 51 sind mit den jedem Fördergurt 28 zugeordneten Bremsschenkeln 47 im unmittelbar in Transportrichtung folgenden Bereich des Förderabschnitts 35 verbunden. Die Seitenführungen 51 erstrecken sich vorzugsweise bis in den Bereich der außenliegenden Führung 19. Hierdurch wird ein Querverschieben des der Packungsgruppe 11 anschließenden Packungsstrangs 12 während der Abförderung der Packungsgruppe 11 verhindert.

Nach Abschub der Packungsgruppe 11 kehren die Fördergurte 28 wieder in Antriebsstellung gemäß Fig. 2 zurück. Der Vorschub des Packungsstrangs 12 wird durch die ständig laufenden Seitenförderer 22, 23 und die sich in Antriebsstellung befindlichen Fördergurte 28 wieder in Gang gesetzt.

Die zusätzlichen Förderorgane - Fördergurte 28 - für den Ausgleich von Positionsunterschieden der Reihen 13..16 sind hier so angeordnet, daß ein Nachfördern ausschließlich im Bereich desjenigen Teils des Packungsstrangs 12 stattfindet, der sich bereits außerhalb der Seitenförderer 22, 23 befindet. Die Fördergurte 28 wirken demnach in einem Bereich der freien Förderung des Packungsstrangs 12.

Die Zwischenrollen 29 zur Übertragung des Antriebs von den Seitenförderern 22, 23 auf die Fördergurte 28 sind bei dem vorliegenden Ausführungsbeispiel auf einer gemeinsamen, drehbar gelagerten, aufrechten Tragachse 53 angeordnet bzw. Teil derselben. Dadurch werden die sich in Förderstellung (Fig. 2) befindenden Fördergurte 28 stets gemeinsam und mit derselben Drehgeschwindigkeit angetrieben. Durch die Axialverschiebung der Schubstange 44 bzw. der Halteplatte 36 werden die Fördergurte 28 aus der Antriebsstellung herausbewegt, und zwar in die Bremsstellung unter Anlage an der als Bremsorgan wirkenden Bremsfläche 48. Die Fördergurte 28 bleiben mit ihren Förder-Trumen 33 in der Anlageposition zu den Packungen 10 der Reihen 13..16.

Der Druckmittelzylinder 45 ist über einen Sockel 54 mit einer Tragvorrichtung verbunden. Auch die Tragwände 39, 40 der Seitenträger 38 sind an dieser Tragvorrichtung angebracht.

Um eine möglichst korrekte Förderung des Packungsstrangs 12 zu gewährleisten, ist der Fördertrum 24 der Seitenförderer 22, 23 elastisch mit Druck beaufschlagt in Richtung gegen die Stirnflächen der Packungen 10. Hierzu sind etwa S-förmig gestaltete Andrückfedern 55 an der Tragwand 25 angebracht. Mit einem abgerundeten Schenkel liegen die Andrückfedern 55 am Fördertrum 24 an. Weiterhin sind die Fördergurte 28 mit einem runden Querschnitt ausgebildet. Diese greifen in korrespondierende, halbkreisförmig ausgebildete Nuten 56 der Umlenkrollen 30, 31 bzw. der Stützrollen 32 ein.

## Patentansprüche

1. Verfahren zum Transport eines aus mehreren übereinander oder nebeneinander angeordneten Reihen (13, 14, 15, 16) von Packungen (10) bestehenden Packungsstrangs (12) mit relativ zueinander ausgerichteten Packungen (10) der Reihen (13..16), **dadurch gekennzeichnet**, daß die Relativstellung der Packungen (10) der Reihen (13..16) zueinander überwacht und daß jeder Reihe (13..16) ein gesondertes Förderorgan zugeordnet ist, das bei Relativverschiebung von Reihe (13..16) zu Reihe (13..16) eine in Förderrichtung zurückliegende Reihe (13..16) aufgrund entsprechender Steuersignale von Überwachungsorganen durch zusätzliche Förderbewegung relativ zu den übrigen Reihen (13..16) bis zur Ausrichtung mit diesen transportiert.

2. Verfahren nach Anspruch 1, dadurch gekennzeichnet, daß die in Transportrichtung vornliegenden Reihen verzögert transportiert oder angehalten werden und die zurückliegende Reihe bis zur Ausrichtung mit diesen weiter transportiert wird.

3. Verfahren nach Anspruch 1 oder 2, dadurch gekennzeichnet, daß der Packungsstrang (12) gegen einen Anschlag (18) gefördert und eine in Transportrichtung zurückliegende Reihe bis zur Anlage an diesem Anschlag weitergefördert wird.

4. Vorrichtung zum Transport eines aus mehreren Reihen (13, 14, 15, 16) von Packungen (10) gebildeten Packungsstrangs (12), insbesondere zur Bildung von Packungsgruppen (11) durch Abschub derselben quer zum Packungsstrang (12), wobei der Packungsstrang (12) durch Endlosförderer, insbesondere durch zwei an gegenüberliegenden Seiten des Packungsstrangs (12) angeordnete Seitenförderer (22, 23), transportierbar ist, **gekennzeichnet durch** Überwachungsorgane (49) für die Relativstellung der Reihen (13..16) der Packungen (10) zueinander, wobei jeder Reihe ein gesondertes Förderorgan, insbesondere ein Fördergurt (28) zugeordnet ist, das bei einer in Förderrichtung zurückliegenden Reihe (13..16) aufgrund entsprechender Steuersignale der Überwachungsorgane (49) einen zusätzlichen Förderantrieb auf die zurückliegende Reihe (13..16) bis zur relativen Gleichstellung ausübt.

5. Vorrichtung nach Anspruch 3, dadurch gekennzeichnet, daß bei übereinander angeordneten Reihen (13..16) und Seitenförderern (22, 23) für diese Reihen jeder Reihe (13..16) mindestens ein Fördergurt (28) zugeordnet ist, der in Antriebsstellung mit den Seitenförderern (22, 23) in Antriebsverbindung steht, insbesondere über eine Zwischenrolle (29) mit Reibverbindung zum Seitenförderer (22, 23) einerseits und zum zugeordneten Fördergurt (28) andererseits.

6. Vorrichtung nach Anspruch 5 oder einem der weiteren Ansprüche, dadurch gekennzeichnet, daß die gesonderten Förderorgane für die Reihen (13..16), nämlich die Fördergurte (28) in Förderrichtung den Seitenförderern (22, 23) für den Packungsstrang (12) nachgeordnet sind, insbesondere im Anschluß an Umlenkwalzen (26) für die Seitenförderer (22, 23), wobei die Fördergurte (28) im Bereich der Umlenkwalzen (26) in Antriebsverbindung mit den Seitenförderern (22, 23) sind.

7. Vorrichtung nach Anspruch 4 oder einem der weiteren Ansprüche, dadurch gekennzeichnet, daß die Fördergurte (28) in Förderrichtung angetriebene Förder-Trume (33) aufweisen, die an mehreren Packungen (10) einer Reihe (13..16) anliegen und in Antriebsstellung die Packungen (10) zusätzlich fördern.

8. Vorrichtung nach Anspruch 4 oder einem der weiteren Ansprüche, dadurch gekennzeichnet, daß eine in Förderrichtung rückwärtig liegende Umlenkrolle (31) derart angeordnet ist, daß sich die Fördergurte (28) bzw. deren Förder-Trume (33) in einem Eingangsabschnitt (34) unter einem spitzen Winkel den zugeordneten Reihen (13..16) in Förderrichtung bis zur Anlage an denselben nähern.

9. Vorrichtung nach Anspruch 4 oder einem der weiteren Ansprüche, dadurch gekennzeichnet, daß in einem den Eingangsabschnitt (34) anschließenden Förderabschnitt (35) eine Umlenkrolle (30) und eine Stützrolle (32) derart angeordnet sind, daß die Fördergurte (28) bzw. deren Förder-Trume (33) unter vollständiger Anlage an den Packungen (10) der ihnen zugeordneten Reihen (13..16) in Förderrichtung weiterbewegt werden.

10. Vorrichtung nach Anspruch 4 oder einem der weiteren Ansprüche, dadurch gekennzeichnet, daß die Fördergurte (28) unter Aufrechterhaltung der Anlage an den Packungen (10) in antriebslosem Zustand durch Anlage an einem Bremsorgan abbremsbar sind und/oder zum zeitweiligen Festhalten des Packungsstrangs (12) festsetzbar sind.

11. Vorrichtung nach Anspruch 4 oder einem der weiteren Ansprüche, dadurch gekennzeichnet, daß sich zur Führung des Packungsstrangs (12) Seitenführungen (51) an die Seitenförderer (22, 23) anschließen und im Bereich der Fördergurte (28) Schlitze (52) für den Durchtritt der Förder-Trume (33) an die Reihen (13..16) des Packungsstrangs (12) aufweisen.

12. Vorrichtung nach Anspruch 4 oder einem der weiteren Ansprüche, dadurch gekennzeichnet, daß die Fördergurte (28) als Riemen mit rundem Querschnitt ausgebildet sind, die in korrespondierende Nuten (56) der Umlenkrollen (30, 31) bzw. der Stützrollen (32) angeordnet sind.

13. Vorrichtung nach Anspruch 4 oder einem der weiteren Ansprüche, dadurch gekennzeichnet, daß der Packungsstrang (12) zur Bildung von Packungsgruppen (11) gegen einen Anschlag, insbesondere gegen eine Führung (18) einer quergerichteten Gruppenbahn (17), förderbar ist, wobei die Förderorgane (28) für die gegen den Anschlag (18) laufenden Reihen (13..16) außer Antriebsstellung bzw. in Bremsstellung bringbar sind und für die zurückliegenden Reihen (13..16) in Antriebsstellung bleiben.

## Claims

1. Process for transporting a string of packs (12) which comprises a plurality of rows (13, 14, 15, 16) of packs (10), said rows being arranged one above the other or one beside the other, and having the packs (10) of the rows (13..16) aligned relative to one another, characterized in that the position of the packs (10) of the rows (13..16) relative to one another is monitored, and in that each row (13..16) is assigned a separate conveying member which, in the event of displacement of one row (13..16) relative to another row (13..16), a row (13..16) which lies behind in the conveying direction is, on account of corresponding control signals from monitoring members, transported relative to the other rows (13..16), by means of an additional conveying movement, until it is aligned with said other rows.

2. Process according to Claim 1, characterized in that the rows which lie in front in the transporting direction are slowed down or stopped, and the row lying behind continues to be transported until it is aligned with said rows.

3. Process according to Claim 1 or 2, characterized in that the string of packs (12) is conveyed against a stop (18), and a row which lies behind in the transporting direction continues to be conveyed until it butts against said stop.

4. Apparatus for transporting a string of packs (12) formed from a plurality of rows (13, 14, 15, 16) of packs (10), in particular for forming groups of packs (11) by pushing off the latter transversely with respect to the string of packs (12), it being possible for the string of packs (12) to be transported by endless conveyors, in particular by two side conveyors (22, 23) arranged on opposite sides of the string of packs (12), characterized by members (49) for monitoring the position of the rows (13..16) of the packs (10) relative to one another, each row being assigned a separate conveying member, in particular a conveying belt (28), which, in the event of a row (13..16) lying behind in the conveying direction, exerts, on account of corresponding control signals of monitoring members (49), an additional conveying drive action on the row (13..16) lying behind until the rows are in alignment relative to one another.

5. Apparatus according to Claim 3, characterized in that, with rows (13..16) arranged one above the other and side conveyors (22, 23) for these rows, each row (13..16) is assigned at least one conveying belt (28) which, in the drive position, is in drive connection with the side conveyors (22, 23), in particular via an intermediate roller (29) which is in frictional connection with the side conveyor (22, 23), on the one hand, and with the associated conveying belt (28), on the other hand.

6. Apparatus according to Claim 5 or one of the further claims, characterized in that the separate conveying members for the rows (13..16), namely the conveying belts (28), are arranged downstream, in the conveying direction, of the side conveyors (22, 23) for the string of packs (12), in particular following deflecting rollers (26) of the side conveyors (22, 23), the conveying belts (28) being in drive connection with the side conveyors (22, 23) in the region of the deflecting rollers (26).

7. Apparatus according to Claim 4 or one of the further claims, characterized in that the conveying belts (28) exhibit conveying strands (33) which are driven in the conveying direction, butt against a plurality of packs (10) of a row (13..16), and, in the drive position, additionally convey the packs (10).

8. Apparatus according to Claim 4 or one of the further claims, characterized in that a deflecting roller (31) which lies at the rear in the conveying direction is arranged such that, in an inlet section (34), the conveying belts (28), or the conveying strands (33) thereof, approach the associated rows (13..16) at an acute angle in the conveying direction until they come to butt against said rows.

9. Apparatus according to Claim 4 or one of the further claims, characterized in that, in a conveying section (35) adjoining the inlet section (34), a deflecting roller (30) and a supporting roller (32) are arranged such that the conveying belts (28), or the conveying strands (33) thereof, continue to be moved in the conveying direction while butting to the full extent against the packs (10) of the rows (13..16) assigned to them.

10. Apparatus according to Claim 4 or one of the further claims, characterized in that, while maintaining the abutment against the packs (10), the conveying belts (28), in the non-driven state, may be braked by abutment against a braking member and/or can be stopped in order temporarily to arrest the string of packs (12).

11. Apparatus according to Claim 4 or one of the further claims, characterized in that, for guidance of the string of packs (12), side guides (51) adjoin the side conveyors (22, 23) and, in the region of the conveying belts (28), exhibit slits (52) for the through-passage of the conveying strands (33) to the rows (13.. 16) of the string of packs (12).

12. Apparatus according to Claim 4 or one of the further claims, characterized in that the conveying belts (28) are designed as belts which have a round cross-section and are arranged in corresponding grooves (56) of the deflecting rollers (30, 31) and of the supporting rollers (32).

13. Apparatus according to Claim 4 or one of the further claims, characterized in that, in order to form groups of packs (11), the string of packs (12) can be conveyed against a stop, in particular against a guide (18) of a transversely directed group track (17), it being possible for the conveying members (28) to be moved out of the drive position and into the braking position for the rows (13..16) running against the stop (18), and the conveying members (28) remaining in the drive position for the rows (13..16) lying behind.

## Revendications

1. Procédé de transport d'un cordon de paquets (12) constitué de plusieurs files (13, 14, 15, 16) de paquets (10) placées les unes au-dessus des autres ou les unes à côté des autres avec paquets (10) des files (13 à 16) alignés les uns par rapport aux autres, caractérisé par le fait que la position relative des paquets (10) des files (13 à 16) les uns par rapport aux autres est contrôlée et qu'à chaque file (13 à 16) est affecté un organe transporteur séparé qui, en cas de décalage relatif d'une file (13 à 16) à l'autre (13 à 16), transporte, d'après des signaux de commande correspondants d'organes de contrôle, une file (13 à 16), située en arrière dans la direction de transport, par mouvement de transport supplémentaire par rapport aux autres files (13 à 16) jusqu'à ce qu'elle soit alignée avec celles-ci.

2. Procédé selon la revendication 1, caractérisé par le fait que les files situées en avant dans la direction de transport sont transportées de manière ralentie ou arrêtées et la file située en arrière continue d'être transportée jusqu'à ce qu'elle soit alignée avec celles-ci.

3. Procédé selon l'une des revendications 1 et 2, caractérisé par le fait que le cordon de paquets (12) est transporté jusque contre une butée (18) et une file située en arrière dans la direction de transport continue d'être transportée jusqu'à ce qu'elle s'appuie contre cette butée.

4. Dispositif de transport d'un cordon de paquets (12) formé de plusieurs files (13, 14, 15, 16) de paquets (10), en particulier pour la formation de groupes de paquets (11) par ripage de ceux-ci perpendiculairement au cordon de paquets (12), dans lequel le cordon de paquets (12) est transporté par des transporteurs sans fin, en particulier par deux transporteurs latéraux (22, 23) placés sur des côtés opposés du cordon de paquets (12), caractérisé par des organes de contrôle (49) pour le contrôle de la position relative des files (13 à 16) de paquets (10) les uns par rapport aux autres, à chaque file étant affecté un organe transporteur séparé, en particulier une courroie transporteuse (28), qui, lorsqu'une file (13 à 16) est en arrière dans la direction de transport, exerce, d'après des signaux de commande correspondants des organes de contrôle (49), un entraînement supplémentaire de transport sur cette file (13 à 16) située en arrière jusqu'à mise au même niveau relatif.

5. Dispositif selon la revendication 3, caractérisé par le fait que dans le cas de files (13 à 16) placées les unes aux-dessus des autres et de transporteurs latéraux (22, 23) pour ces files, à chaque file (13 à 16) est affectée au moins une courroie transporteuse (28) qui, en position d'entraînement, est en liaison d'entraînement avec les transporteurs latéraux (22, 23), en particulier par un galet intermédiaire (29) avec liaison par friction d'un côté avec le transporteur latéral (22, 23) et de l'autre côté avec la courroie transporteuse (28) associée.

6. Dispositif selon la revendication 5 ou une des autres revendications, caractérisé par le fait que les organes transporteurs séparés pour les files (13 à 16), c'est-à-dire les courroies transporteuses (28), sont placés en aval des transporteurs latéraux (22, 23) pour le cordon de paquets (12), en particulier après des rouleaux de renvoi (26) des transporteurs latéraux (22, 23), les courroies transporteuses (28) étant en liaison d'entraînement avec les transporteurs latéraux (22, 23) dans la zone de ces rouleaux de renvoi (26).

7. Dispositif selon la revendication 4 ou une des autres revendications, caractérisé par le fait que les courroies transporteuses (28) présentent des brins transporteurs (33) entraînés dans la direction de transport qui s'appuient sur plusieurs paquets (10) d'une file (13 à 16) et, en position d'entraînement, produisent un transport supplémentaire des paquets (10).

8. Dispositif selon la revendication 4 ou une des autres revendications, caractérisé par le fait qu'une poulie de renvoi (31) située en arrière dans la direction de transport est placée de façon telle que les courroies transporteuses (28), plus précisément leurs brins transporteurs (33), dans un tronçon d'entrée (34), s'approchent sous un angle aigu des files associées (13 à 16) dans la direction de transport jusqu'à s'appuyer contre celles-ci.

9. Dispositif selon la revendication 4 ou une des autres revendications, caractérisé par le fait qu'une poulie de renvoi (30) et une poulie d'appui (32) sont placées dans un tronçon de transport (35) faisant suite au tronçon d'entrée (34) de façon telle que les courroies transporteuses (28), plus précisément leurs brins transporteurs (33), y soient mus dans la direction de transport avec appui complet sur les paquets (10) des files (13 à 16) associées à eux.

10. Dispositif selon la revendication 4 ou une des autres revendications, caractérisé par le fait que les courroies transporteuses (28) peuvent, à l'état sans entraînement, avec maintien de leur appui sur les paquets (10), être, par appui sur un organe de freinage, freinées et/ou arrêtées pour l'immobilisation temporaire du cordon de paquets (12).

11. Dispositif selon la revendication 4 ou une des autres revendications, caractérisé par le fait que, pour le guidage du cordon de paquets (12), des guides latéraux (51) font suite aux transporteurs latéraux (22, 23) et présentent, dans la zone des courroies transporteuses (28), des fentes (52) pour le passage des brins transporteurs (33) jusqu'aux files (13 à 16) du cordon de paquets (12).

12. Dispositif selon la revendication 4 ou une des autres revendications, caractérisé par le fait que les courroies transporteuses (28) sont des courroies de section ronde qui sont placées dans des gorges correspondantes (56) des poulies de renvoi (30, 31) et des poulies d'appui (32).

13. Dispositif selon la revendication 4 ou une des autres revendications, caractérisé par le fait que le cordon de paquets (12) est, pour la formation de groupes de paquets (11), amené contre une butée, en particulier contre un guide (18) d'une voie de groupes dirigée transversalement (17), les organes transporteurs (28) pouvant être mis hors position d'entraînement ou en position de freinage pour les files (13 à 16) qui arrivent contre la butée (18) et restant en position d'entraînement pour les files (13 à 16) situées en arrière.
